# EUROPEAN PATENT APPLICATION

(11) **EP 1 455 482 A1**
(43) Date of publication of application: **08.09.2004**
(21) Application number: 03290511.9
(22) Date of filing: 04.03.2003
(51) Int. Cl.: H04L 12/24

(54) **Method and system for providing location of network devices**

(71) Applicant: Hewlett-Packard Development Company, L.P., Houston, TX 77070 (US)
(72) Inventor: Larvoire, Jean-Francois, 38240 Meylan (FR)
(74) Representative: Lloyd, Richard Graham

(57) **Abstract**

A plurality of devices (101-106) networked to a control unit (10) and to one another. The control unit (10) includes a display (12) and generates and provides location data of the devices within the environments in which they are placed. This location data is displayed on the display (12) and/or on the user computers (102, 104). The image displayed on the display (12) is a virtual representation of the environment and includes a plurality of virtual representations of networked devices, preferably icons (101'-112'). Each icon (101'-112') is positioned with respect to the virtual representation of the environment equivalent to the actual location of the devices. A user viewing the image on the display (12) can see the visual representation of the environment and the positions of the devices themselves. As described below, this enables the user not only to locate the devices themselves within the actual environment by means of this display but also to operate and control the devices for his/her purposes. Devices can be located by location sensors on the devices or, where these are not provided, by a "drag and drop" operation, that is by locating a pointer (120) on one of the icons (113'-115'), dragging that icon to the appropriate location and then "dropping" that icon into position.

## Description

### Field of the Invention:

The present invention relates to a method and system for providing a location of one or more devices within an environment, in the preferred embodiment for locating and/or configuring location dependant parameters of networked devices.

### Background of the Invention:

There has been much activity in recent years in seeking to locate devices which are intended to operate together, either continuously or intermittently. For example, in the article "Location Systems for Ubiquitous Computing" by Jeffrey Hightower and Gaetano Boriello, published in IEEE Computing 34(8):57-66, August 2001, there are described various systems for locating devices and/or people for use in emerging mobile computing applications. Examples include systems by which a device or other object can compute its own position, such as by GPS or an equivalent system, and by which a remote controller can locate such devices/objets using tagging devices and so on the devices/objects themselves. Various algorithms are also disclosed for determining the location of devices and other objects where they are not able to determine absolute positions themselves, such as by direct position measurement, triangulation and other methods.

Locating such devices is useful in the employment of the devices, for example where a person in a building wishes to know the location of the nearest networked printer or other item of equipment. Similarly, a user may wish to know the location of a device or other object for providing services to that device or object.

The systems contemplated to date generally require each device or object to be provided with a location mechanism, as described above. This is costly and necessarily requires each device or object to have a location mechanism compatible with the location system. Devices which are not provided with some form of location beacon or with a compatible beacon cannot be located.

Problems have also arisen with respect to the manner in which a user is notified of the location of the device or other object. Typically, this is provided as a displayed list of devices/objects and an indication of their location. The typically lists the devices in alphabetical order. While such lists are usable when a relatively small number of devices/objects is present they become harder to use the larger the number of devices/objects in the list.

### Summary of the Present Invention:

The present invention seeks to provide improved apparatus and a method of providing a location of one or more devices within an environment, for locating devices and/or for configuring location dependant parameters of networked devices.

The term device used hereinafter is intended to include devices and/or other objects.

According to an aspect of the present invention, there is provided a system for providing a location of one or more devices within an environment, including a controller, a display coupled to the controller, the controller including a visual representation generator operable to generate and to display on the display a visual representation of the environment and a visual representation of the or each device within the visual representation of the environment.

Preferably, the visual representation of the environment provides a map or plan of the environment.

The system provides for easy visualisation of the location of devices within an environment in a format which is intuitive. It can be used, for example, to help a user to find a device, such as a computer printer, closest to his/her location. It can also be used to control devices in particular locations, such as window blinds at one elevation of a building. Several other example applications are disclosed below.

In one embodiment, the devices are provided with their own location detectors and the controller is operable to obtain location data from the devices in order to cause the placing of the visual representations of the devices in the correct locations within the visual representation of the environment.

In another embodiment, the controller is operable to provide for the placement of devices within the visual representation of the environment by allowing a user to place the visual representation of the device in the appropriate location in the visual representation of the environment. Typically, this can be by a "drag and drop" operation on an icon representing the device. This allows for the location of devices which are not provided with their own location detectors, such as simple portable devices for which the cost of a detection mechanism would not be justified. Similarly, this embodiment does not require the provision of a device location infrastructure of the types disclosed in the above-mentioned article by Hightower and Boriello.

In the preferred embodiment the controller is operable to cause location data to be stored in a memory of the associated device. This allows each device to communicate its position to other entities, for example users or other devices not having direct access to the above-mentioned display. In this manner, the display and controller could be provided at a base station or administrator location and for subsidiary entities such as users and the like still to be able to make use of the location information generated by the system. In some embodiments, users could be provided with a copy of the main display or with a portion of the main display relevant to their uses or only to their particular location.

Another important advantage to storing location parameters in the memory of the device is that the device is then able to provide that data to any other entity, even if the controller that provided the location data in the first place is disconnected from the network.

The preferred embodiment provides for the location of devices of the same type in the same or different locations.

The preferred embodiment allows a user to select a device by simple selection of the visual representation of the device. Use of such device can either be directly by the user or through the controller.

According to another aspect of the present invention, there is provided a method of providing a location of one or more devices within an environment, including the steps of displaying on a display a visual representation of the environment and a visual representation of the or each device within the visual representation of the environment.

Preferably, the visual representation of the environment provides a map or plan of the environment.

In one embodiment, the devices are provided with their own location detectors and the method includes the step of obtaining location data from the devices in order to place the visual representations of the devices within the visual representation of the environment.

In another embodiment, the method provides for the placement of devices within the visual representation of the environment by allowing a user to place the visual representation of the device in the appropriate location in the visual representation of the environment.

In the preferred embodiment the method includes the step of causing location data to be stored in memory of the associated device.

The preferred embodiment is particularly suited for Universal Plug and Play (UPnP) devices and to similar systems (Jini, Salutation etc.), in which each device has stored in permanent memory thereof the location parameters and new UPnP services for reading and writing these parameters. An example of descriptor is given below.

### Description of the Drawings:

Embodiments of the present invention are described below, by way of example only, with reference to the accompanying drawings, in which:
Figure 1 shows in schematic form an arrangement of controller and series of networked devices of an embodiment of device location system;
Figure 2 is a plan view in schematic form of a visual representation of an environment, in this case of the plan of a building, as displayed in the controller of Figure 1;
Figure 3 shows two flow charts of two embodiments of locating routines; and
Figure 4 is a flow chart showing the use of a peripheral device by means of the system disclosed herein.

### Description of the Preferred Embodiments:

There is disclosed below a preferred embodiment of system and method for providing a location of a plurality of networked devices within an environment and in which the devices are displayed as icons overlying a visual representation of the environment in which the devices are actually located. The embodiment described below shows a single controller with a single display for displaying the virtual representation of the environment. However, this and the virtual representations of the devices (in the preferred embodiment icons) could be displayed in a plurality of locations, for example also on remote user devices remote from the central control unit. In some embodiments, a user would have access to the entirety of the virtual representation of the environment while in other embodiments this may be tailored for the needs of the particular user (for example limited to particular types of devices or to only a part of the environment representative of the immediate surroundings of the particular user.

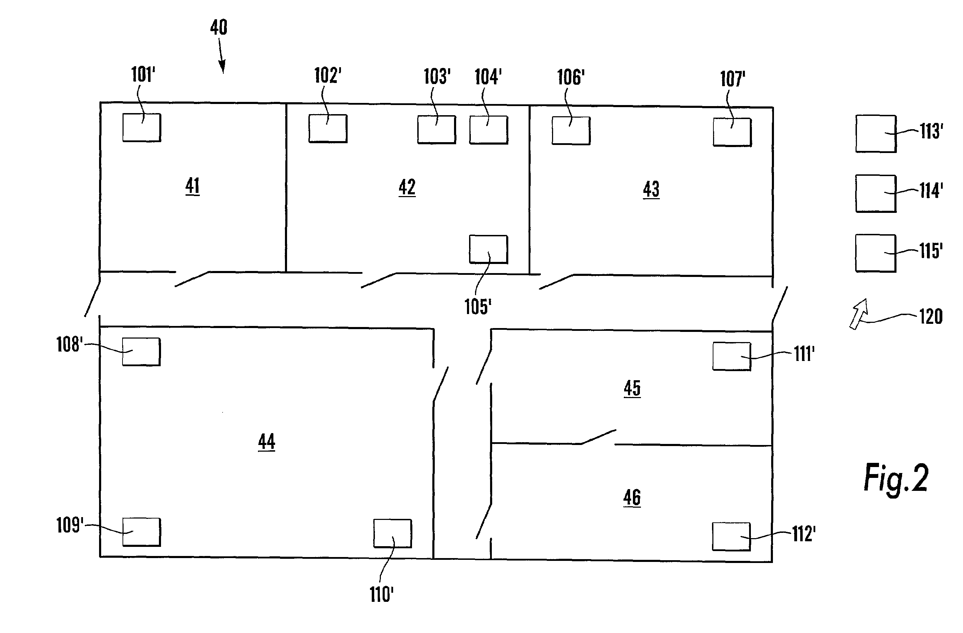

The term "virtual" used herein is intended to encompass representations from sophisticated virtual representations of an environment to schematic representations, such as the schematic plan of Figure 2. In the preferred embodiment it extends to any representation which is intuitive to the user and which does not require either any significant user training or interpretation of the representation provided.

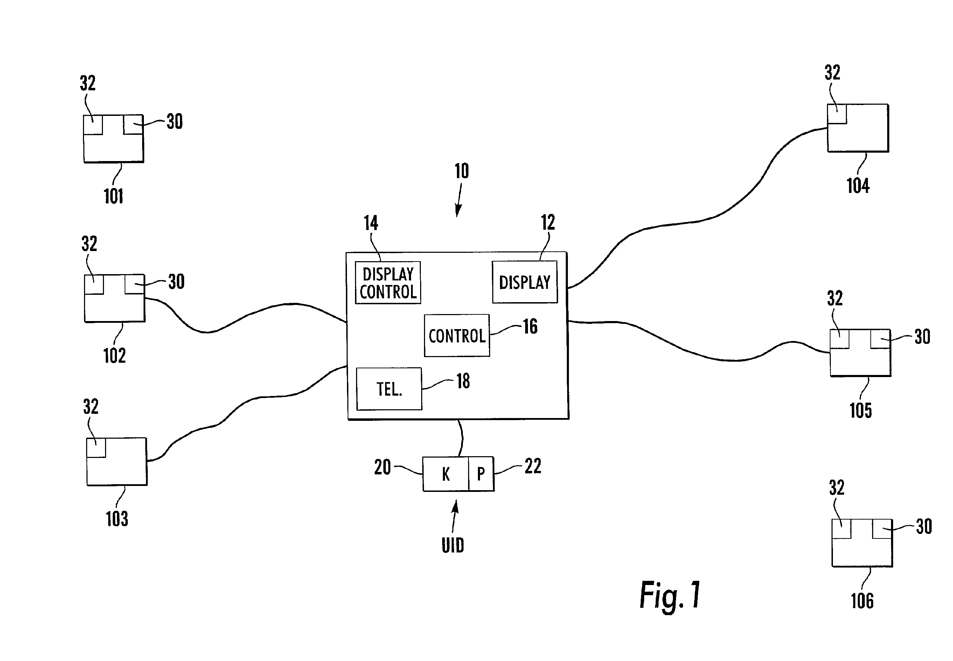

Referring to Figure 1 the embodiment of networked system shown includes a control unit 10 which may be a stand alone unit or part of a network server or incorporated within a user device. As explained above, in a large network there may be a plurality of such control units 10 spread around the network.

In the example shown in Figure 1, there is also provided a plurality of devices 101-106 networked to the control unit 10 and to one another. The type of network is not relevant and in the example in Figure 1 different types of network are shown operating concurrently. For example, devices 101, 102, 105 and 106 are provided with wireless communication units 30, such as Bluetooth® wireless devices. Devices 103 and 104 do not have any such wireless facility and are networked by a wired link, such as an Ethernet link. In the example shown, the devices 102 and 105 are also networked by a wired link. Each device 101-106 is also provided with memory 32 for its own purposes and for use by the system, as described below.

In the example of Figure 1, the devices 102 and 104 are user terminals, typically user computers. The devices 101, 103, 105 and 106 are peripheral devices, such as printers, scanners and the like.

The control unit 10 includes a display 12, which is typically a computer monitor, a display controller 14, a controller 16, typically microprocessor based, and a telecommunications unit 18, which typically includes wired and wireless facilities, such as an Ethernet port and wireless communication unit such as a Bluetooth® device.

The control unit 10 is also provided with one or more user interface devices (UIDs), in this example a keyboard 20 and pointing device 22 of any suitable form.

The devices 101-106 are typically spread in an environment, such as a building, series of buildings. Although in this example the devices are all related to computing, the system disclosed herein can be used in many different applications, as explained below.

The control unit 10 is designed to generate and provide location data of the devices within the environments in which they are placed. This location data is then displayed on the display 12 and/or on the user computers 102, 104 and/or on other display devices not shown in Figure 1.

Referring now to Figure 2 there is shown an example of image displayed on the display 12 and/or other provided displays. In Figure 2, the image is a virtual representation of a building, in this case being a plan of the layout of a floor of the building. The plan 40 includes a plurality of rooms 41-46. The image also includes a plurality of virtual representations of networked devices, in this case in the form of icons 101'-112'. Each of these icons 101'-112' is positioned with respect to the virtual representation of the environment (plan 40) equivalent to the actual location of the devices within the building itself. Preferably, the icons 101'-112' provide images representative of the devices with which they are associated.

Thus, a user viewing the image on the display 12 or other display can see the visual representation of the environment and the positions of the devices themselves. As described below, this enables the user not only to locate the devices themselves within the actual environment by means of this display but also to operate and control the devices for his/her purposes.

Figure 2 also shows three icons 113'-115' which are located alongside the plan 40 and not within the environment depicted by the plan 40. There is also shown a pointer 120, which is a typical computer display pointer. The icons 113'-115' represent devices known to the system (for example by having been entered into the system by a system administrator) but for which the location is not known. Typically, these devices are not provided with position detectors or position indicators and therefore the user or system administrator needs to determine the location of these devices 113'-115' before being able to place them within the plan 40.

In the preferred embodiment, the positioning of these devices 113'-115' is carried out by a "drag and drop" operation, that is by locating the pointer 120 on one of the icons 113'-115', dragging that icon to the appropriate location on the plan 40 representative of the actual location of the associated device and then "dropping" that icon into position. Suitable drag and drop operations of this type are well known in the art and therefore are not described in further detail.

The position in which the icon 113'-115' is dropped is taken by the system to represent the actual position of the device.

Thus, a system administrator (or indeed user) can easily place new devices within the virtual environment and enables the easy employment of that device within the network. The system preferably also allows for the moving of devices within the environment 40 by a similar "drag and drop" operation from one location on the plan 40 to another, and also for the removal of a device from the plan 40.

In the preferred embodiment, the system is not limited only to manual placement of the icons 101'-115' within the virtual representation of the environment but also provides for automatic placement of devices. This is achieved by automatic position detection of one or more of the networked devices, making use of any suitable location system, for example any of the systems disclosed by Hightower and Boriello in their article "Location System for Ubiquitous Computing" referred to above.

Where networked devices are able to determine their own location or the control unit 10 is itself able to do so, for example by a provision of tags on some of the devices, the controller 16 is operable to obtain or determine position data and to translate that position data into data suitable for display in the virtual representation of the environment, for example the plan view shown in Figure 2.

On the other hand, where the position of a device needs to be entered manually, this could either be done by the drag and drop procedure described above or by a system administrator or user entering location co-ordinates into the control unit 10 via the keyboard 20, for example. For the latter implementation, the display could be provided with a suitable grid (for example, a grid of longitudinal and latitudinal with an arbitrary scale) for allowing users to enter the location of devices by use of the grid references rather than by a drag and drop action. These arbitrary positions can also be used to denote the relative positions of devices to one another and within the environment.

The located devices can then be accessed or controlled by reference to their determined locations. Moreover, in the preferred embodiment, the system stores within the memory 32 of each device the location parameters for that device. The location parameters could be absolute position references, could be relative to a grid or could be relative position data, depending upon the particular implementation and upon the nature of the device itself. In the preferred embodiment each device is also provided with unique device identification data which is preferably stored in the memory 32 together with its location parameters.

Knowledge of the actual position of a device can be useful in network communications. For example, a user computer 102 or 104 can identify and communicate with a peripheral device 101, 103, 105 or 106 by means of the location data of that device. This location data can in one embodiment be notified to the user computer 102 or 104 by the control unit 10 when the user selects the icon 101'-112' of that device on the display.

The preferred embodiment makes use of the XML descriptor and provides extra fields in the XML descriptor for advice or additional location service interfaces, an example being as follows:

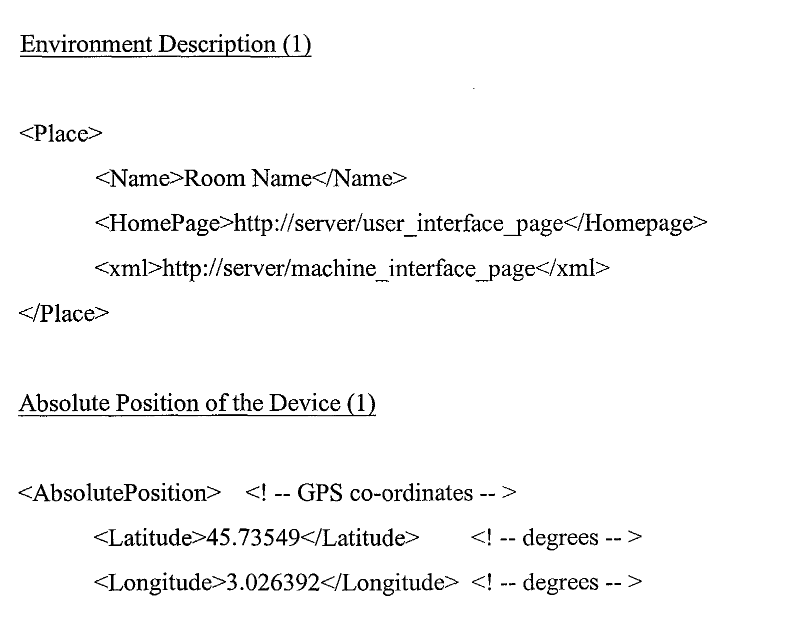

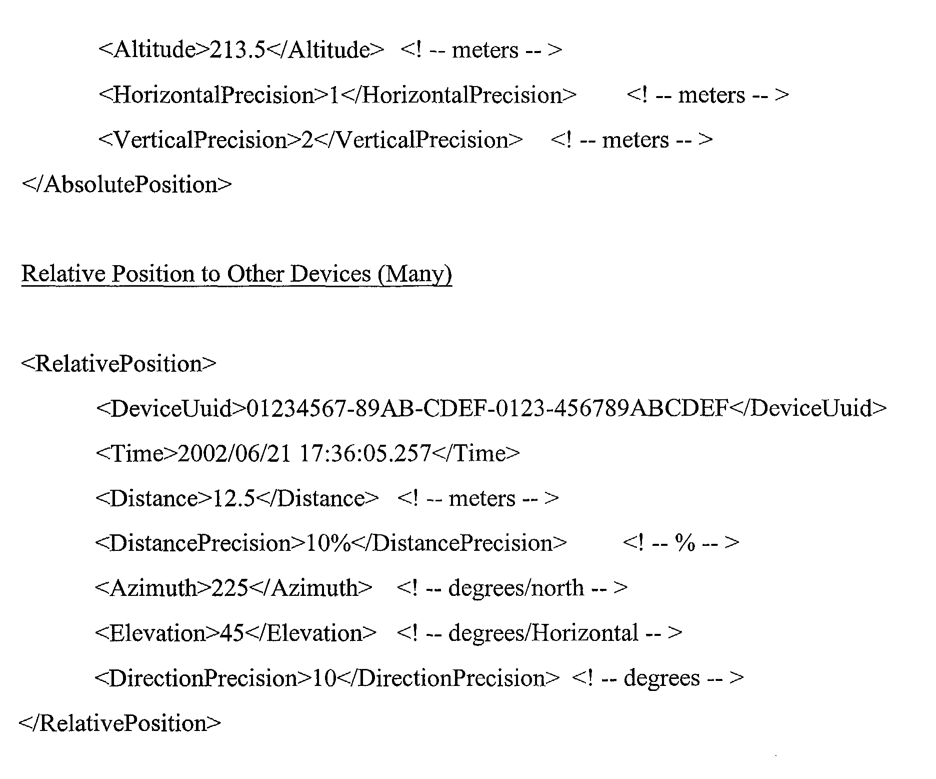

These descriptors are particularly suited for Universal Plug and Play (UPnP) devices, allowing such devices to be networked and located readily within the system and without requiring knowledgeable user input to achieve this.

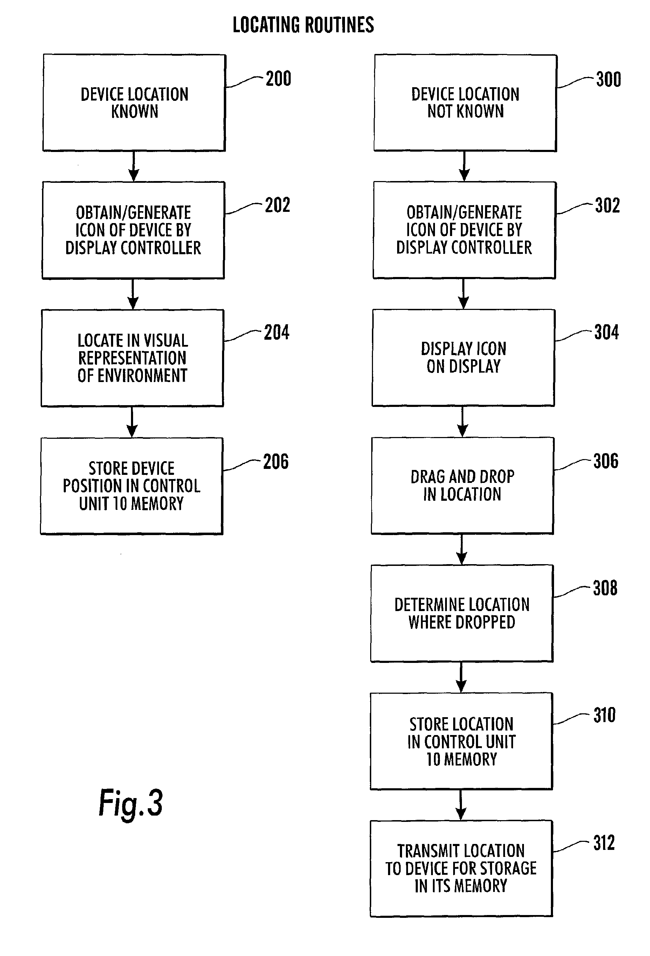

Referring now to Figure 3 there are shown two routines for locating devices in the virtual environment.

In the first routine 200 the location of the device is known, for example by the device having location determining means therein, such as a GPS unit or other position sensor.

At step 202 the routine obtains or generates through the display controller 14 an icon 101'-112' of the device. At step 204 the controller 16, via the display control unit 14, positions the icon 101'-112' in the correct location in the visual representation of the environment displayed on the display 12, for example the representation shown in Figure 2.

At step 206 the position of the device is stored in control unit 10 memory.

The routine 300 is effected when the device cannot determine its own location. At step 302 the display control unit 14 obtains or generates an icon 101'-112' for that device.

At step 304 the display controller 14 displays the icon 101'-112' on the display 12, preferably outside the visual representation of the environment as shown with the icons 113'-115' in Figure 2.

At step 306 the user, preferably making use of pointing device 120, drags and drops the icon to the appropriate location on the visual representation of the environment (the plan 40 in Figure 2).

At step 308 the controller 16 determines the location of the icon in the position in which it has been dropped and at step 310 stores parameters representative of that location in control unit 10 memory. At step 312 the controller 10, via the telecommunications unit 18, transmits that location data to the relevant device for storage in its memory 32.

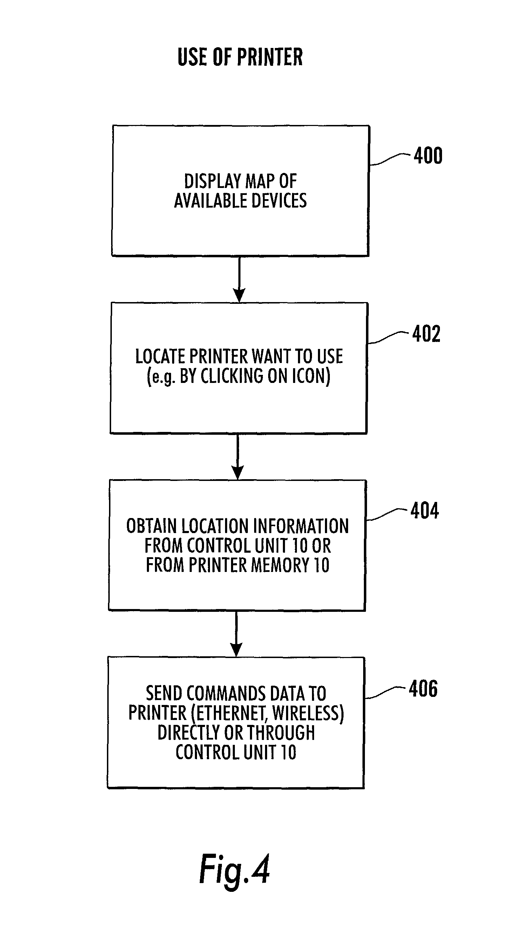

Figure 4 shows an example routine relating to the use of a peripheral device, in this case a printer.

At step 400 the system displays a map of the available devices. At step 402 the location of the printer is determined, for example by clicking on the icon 101'-112' for that printer.

At step 404 the location data for the printer is then obtained, either from the control unit 10 or directly from the printer memory 32. At step 406 commands/data are sent to the printer, for example through Ethernet or a wireless link, again directly to the printer or through the control unit 10.

For a Universal Plug and Play (UPnP) device, the memory of the device stores the location parameters and includes new UPnP services for reading and writing the parameters to memory. As will be apparent to the skilled person from the teachings above, the process relies upon a user installing a UPnP device in the network, then the system displays a map of the environment on which appear the icons of the networked devices at their respective positions. The system obtains this information by carrying out an UPnP enumeration on the available devices and then invoking each device's UPnP service to get its coordinates. Similar considerations apply to other systems such as Jini, Salutation and so on.

It will be apparent to the skilled person that the system and method described herein provide a way of locating devices within a network which is simple for users to understand and which is inherently intuitive. Furthermore, the system and method are suitable for devices which are not provided with their own location sensors, thereby enabling the system and method to be used for considerably simpler and cheaper devices. Therefore, not only can the system and method be more advantageous in themselves but can be extended to devices not previously includable in such location systems.

The system and method can be used to operate devices closest to a user selected from a large number of similar devices; to control devices in a particular location, such as window blinds, air conditioning units and the like; or to carry out maintenance tasks of particular devices which may move within the environment in question.

The system and method can also be used in other applications. For example, a map of a conference room/board room table could be displayed on a user device (for example a personal digital assistant), enabling the user to add to that map representations of people around the table, for example their names.

In another application a new employee being introduced to an environment (for example an office) can have his/her computer programmed by transfering to that computer the location codes of the nearest available printers and other peripheral devices, without the user needing to be involved.

Advantageously, the system also provides for identifying within the visual representation of the environment (for example the plan 40 of Figure 2) an indication of the user's position for orientation purposes.

## Claims

1. A system for providing a location of one or more devices (101-106) within an environment, including a controller (10), a display (12) coupled to the controller, the controller including a visual representation generator (14) operable to generate and to display on the display a visual representation (40) of the environment and a visual representation (101'-112') of the or each device within the visual representation of the environment.

2. A system according to claim 1, wherein the visual representation of the environment (40) provides a map or plan of the environment.

3. A system according to claim 1 or 2, wherein for devices (101-106) provided with their own location detectors the controller (10) is operable to obtain location data from the devices in order to cause the placing of the visual representations (101'-112') of the devices in the correct locations within the visual representation of the environment.

4. A system according to claim 1, 2 or 3, wherein the controller (10) is operable to provide for the placement of devices (101-106) within the visual representation of the environment by allowing a user to place the visual representation (101'-112') of the device in the appropriate location in the visual representation of the environment.

5. A system according to claim 4, wherein the controller (10) provides for a "drag and drop" operation on an icon representing the device.

6. A system according to any preceding claim, wherein the controller (10) is operable to cause location data to be stored in a memory of the associated device.

7. A system according to any preceding claim, wherein the controller (10) allows for selection of a device by selection of the visual representation of the device.

8. A system according to any preceding claim, wherein the controller (10) is a network server.

9. A method of providing a location of one or more devices (101-106) within an environment, including the steps of displaying on a display (12) a visual representation (40) of the environment and a visual representation (101'-112') of the or each device within the visual representation of the environment.

10. A method according to claim 9, wherein the visual representation (40) of the environment provides a map or plan of the environment.

11. A method according to claim 9 or 10, wherein for devices provided with their own location detectors the method includes the step of obtaining location data from the devices in order to place the visual representations of the devices within the visual representation of the environment.

12. A method according to claim 9, 10 or 11, wherein the method provides for the placement of devices within the visual representation of the environment by allowing a user to place the visual representation of the device in the appropriate location in the visual representation of the environment.

13. A method according to any one of claims 9 to 12, including the step of causing location data to be stored in memory of the associated device.

14. A network of devices provided with a system according to any one of claims 1 to 8.

15. A network of devices according to claim 14, wherein at least some of the devices are Universal Plug and Play networked devices, Jini networked devices and/or Salutation networked devices.
